# EUROPEAN PATENT SPECIFICATION

(11) **EP 3 942 874 B1**
(45) Date of publication and mention of the grant of the patent: **27.03.2024**
(21) Application number: 20777027.2
(22) Date of filing: 04.03.2020
(51) Int. Cl.: H04W 74/00, H04W 68/02, H04W 76/27, H04W 4/70, H04W 52/02

(54) **PRECONFIGURED UPLINK RESOURCE DURING PAGING AND INITIAL ACCESS**
VORKONFIGURIERTE UPLINK-RESSOURCE WÄHREND PAGING UND ERSTZUGANG
RESSOURCE DE LIAISON MONTANTE PRÉCONFIGURÉE PENDANT UNE RADIOMESSAGERIE ET UN ACCÈS INITIAL

(30) Priority: 22.03.2019 IN 201941011220
(43) Date of publication of application: 26.01.2022
(73) Proprietor: Nokia Technologies Oy, 02610 Espoo (FI)
(72) Inventor: RATASUK, Rapeepat, Inverness, Illinois 60010 (US); SELVAGANAPATHY, Srinivasan, Bangalore 560066 (IN); MANGALVEDHE, Nitin, Hoffman Estates, Illinois 60010 (US); KOSKINEN, Jussi-Pekka, 90420 Oulu (FI); BHATOOLAUL, David, Swindon Wiltshire SN25 2HD (GB)
(74) Representative: Script IP Limited
(86) International application number: PCT/FI2020/050139
(87) International publication number: WO 2020/193846

(56) References cited:
- EP-A1- 3 413 660
- EP-A1- 3 413 660
- HUAWEI ET AL: "Feature lead summary of Support for transmission in preconfigured UL resources", 3GPP DRAFT; R1-1903254, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20190225 - 20190301 26 February 2019 (2019-02-26), XP051600949, Retrieved from the Internet: URL:http://www.3gpp.org/ftp/tsg%5Fran/WG1% 5FRL1/TSGR1%5F96/Docs/R1%2D1903254%2Ezip [retrieved on 2019-02-26]
- ZTE: "Support for transmission in preconfigured UL resources for NB- IoT", 3GPP DRAFT; R1-1901866 PUR FOR NB-IOT-0214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20190225 - 20190301 17 February 2019 (2019-02-17), XP051599560, Retrieved from the Internet: URL:http://www.3gpp.org/ftp/tsg%5Fran/WG1% 5FRL1/TSGR1%5F96/Docs/R1%2D1901866%2Ezip [retrieved on 2019-02-17]
- NOKIA ET AL: "Further Analysis on shared PUR", 3GPP DRAFT; R2-1900322-SHARED-PUR-V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20190225 - 20190301 15 February 2019 (2019-02-15), XP051601719, Retrieved from the Internet: URL:http://www.3gpp.org/ftp/tsg%5Fran/WG2% 5FRL2/TSGR2%5F105/Docs/R2%2D1900322%2Ezip [retrieved on 2019-02-15]
- ZTE CORPORATION, SANECHIPS: "Further consideration on DL aspects of D-PUR in IDLE", 3GPP TSG-RAN2 meeting#105 3GPP Draft R2-1901479, vol. RAN WG2, 15 February 2019 (2019-02-15), XP051602837, Athens, Greece
- HUAWEI , HISILICON: "Feature lead summary of Support for transmission in preconfigured UL resources", 3GPP TSG RAN WG1 Meeting #96 3GPP Draft R1-1903254, vol. RAN WG1, 26 February 2019 (2019-02-26), XP051600949, Athens, Greece
- ZTE: "Support for transmission in preconfigured UL resources for NB- loT", 3GPP TSG RAN WG1 Meeting #96 3GPP Draft R1-1901866, vol. RAN WG1, 17 February 2019 (2019-02-17), XP051599560, Athens, Greece
- ERICSSON: "PUR Configuration", 3GPP TSG-RAN WG2 #105 3GPP Draft R2-1900736, vol. RAN WG2, 15 February 2019 (2019-02-15), XP051602112, Athens, Greece

## Description

### BACKGROUND:

### Field:

Certain embodiments may relate to communication systems. For example, some embodiments may relate to random access procedures.

### Description of the Related Art:

3rd Generation Partnership Project (3GPP) Release (Rel)-16 includes improvements associated with enhanced machine type communications (eMTC) and narrowband internet of things (NB-IoT), such as discussed in 3GPP work items RP-181450 and RP-181451. One objective includes providing support for transmissions using preconfigured resources in an idle and/or a connected mode based on single-carrier frequency division multiple access (SC-FDMA) waveform for UE with a valid timing advance (TA). Currently, only dedicated preconfigured uplink resources (PUR) in idle mode are supported, where unique or dedicated time-frequency resources are reserved for each UE configured with PUR. PUR transmissions are also contention-free since only one UE may be allocated to the time/frequency resources.

Further relevant prior art disclosures are: HUAWEI ET AL: "Feature lead summary of Support for transmission in preconfigured UL resources",3GPP DRAFT; R1-1903254, XP051600949.

ZTE: "Support for transmission in preconfigured UL resources for NB- IoT",3GPP DRAFT; R1-1901866, XP051599560.

EP 3 413 660 A1.

"Further Analysis on shared PUR", 3GPP Draft; R2-1900322-shared-PUR-V2, XP051601719

### SUMMARY:

According to some aspects, there is provided the subject matter of the independent claims. Some further aspects are defined in the dependent claims

In accordance with some unclaimed embodiments, a method may include determining, by a network entity, whether a user equipment is associated with at least one idle-mode preconfigured uplink resource configuration. The method may further include transmitting, by the network entity, to the user equipment at least one paging message comprising at least one indication that at least one of the at least one idle-mode preconfigured uplink resource configurations may be used for transmitting at least one response to the at least one paging message. The method may further include receiving, by the network entity, from the user equipment, at least one radio resource control message based on at least one of the at least one indicated idle-mode preconfigured uplink resource configurations.

In accordance with some unclaimed embodiments, an apparatus may include means for determining whether a user equipment is associated with at least one idle-mode preconfigured uplink resource configuration. The apparatus may further include means for transmitting to the user equipment at least one paging message comprising at least one indication that at least one of the at least one idle-mode preconfigured uplink resource configurations may be used for transmitting at least one response to the at least one paging message. The apparatus may further include means for receiving at least one radio resource control message based on at least one of the at least one indicated idle-mode preconfigured uplink.

In accordance with some unclaimed embodiments, an apparatus may include at least one processor and at least one memory including computer program code. The at least one memory and the computer program code can be configured to, with the at least one processor, cause the apparatus to at least determine whether a user equipment is associated with at least one idle-mode preconfigured uplink resource configuration. The at least one memory and the computer program code can be further configured to, with the at least one processor, cause the apparatus to at least transmit to the user equipment at least one paging message comprising at least one indication that at least one of the at least one idle-mode preconfigured uplink resource configurations may be used for transmitting at least one response to the at least one paging message. The at least one memory and the computer program code can be further configured to, with the at least one processor, cause the apparatus to at least receive from the user equipment at least one radio resource control message based on at least one of the at least one indicated idle-mode preconfigured uplink resource configurations.

In accordance with some unclaimed embodiments, a non-transitory computer readable medium can be encoded with instructions that may, when executed in hardware, perform a method. The method may include determining whether a user equipment is associated with at least one idle-mode preconfigured uplink resource configuration. The method may further include transmitting to the user equipment at least one paging message comprising at least one indication that at least one of the at least one idle-mode preconfigured uplink resource configurations may be used for transmitting at least one response to the at least one paging message. The method may further include receiving from the user equipment, at least one radio resource control message based on at least one of the at least one indicated idle-mode preconfigured uplink resource configurations.

In accordance with some unclaimed embodiments, a computer program product may perform a method. The method may include determining whether a user equipment is associated with at least one idle-mode preconfigured uplink resource configuration. The method may further include transmitting to the user equipment at least one paging message comprising at least one indication that at least one of the at least one idle-mode preconfigured uplink resource configurations may be used for transmitting at least one response to the at least one paging message. The method may further include receiving from the user equipment, at least one radio resource control message based on at least one of the at least one indicated idle-mode preconfigured uplink resource configurations.

In accordance with some unclaimed embodiments, an apparatus may include circuitry configured to determine whether a user equipment is associated with at least one idle-mode preconfigured uplink resource configuration. The circuitry may further be configured to transmit to the user equipment at least one paging message comprising at least one indication that at least one of the at least one idle-mode preconfigured uplink resource configurations may be used for transmitting at least one response to the at least one paging message. The circuitry may further be configured to receive from the user equipment, at least one radio resource control message based on at least one of the at least one indicated idle-mode preconfigured uplink resource configurations.

In accordance with some unclaimed embodiments, a method may include receiving, by a user equipment, from a network entity, at least one paging message comprising at least one indication that at least one idle-mode preconfigured uplink resource configuration may be used for transmitting at least one response to the at least one paging message. The method may further include determining, by the user equipment, that at least one timing advance is valid. The method may further include transmitting, by the user equipment, at least one radio resource control message to the network entity based upon at least one of the at least one idle-mode preconfigured uplink resource configurations.

In accordance with some unclaimed embodiments, an apparatus may include means for receiving from a network entity, at least one paging message comprising at least one indication that at least one idle-mode preconfigured uplink resource configuration may be used for transmitting at least one response to the at least one paging message. The apparatus may further include means for determining that at least one timing advance is valid. The apparatus may further include means for transmitting at least one radio resource control message to the network entity based upon at least one of the at least one idle-mode preconfigured uplink resource configurations.

In accordance with some unclaimed embodiments, an apparatus may include at least one processor and at least one memory including computer program code. The at least one memory and the computer program code can be configured to, with the at least one processor, cause the apparatus to at least receive from a network entity, at least one paging message comprising at least one indication that at least one idle-mode preconfigured uplink resource configuration may be used for transmitting at least one response to the at least one paging message. The at least one memory and the computer program code can be further configured to, with the at least one processor, cause the apparatus to at least determine that at least one timing advance is valid. The at least one memory and the computer program code can be further configured to, with the at least one processor, cause the apparatus to at least transmit at least one radio resource control message to the network entity based upon at least one of the at least one idle-mode preconfigured uplink resource configurations.

In accordance with some unclaimed embodiments, a non-transitory computer readable medium can be encoded with instructions that may, when executed in hardware, perform a method. The method may include receiving from a network entity, at least one paging message comprising at least one indication that at least one idle-mode preconfigured uplink resource configuration may be used for transmitting at least one response to the at least one paging message. The method may further include determining that at least one timing advance is valid. The method may further include transmitting at least one radio resource control message to the network entity based upon at least one of the at least one idle-mode preconfigured uplink resource configurations.

In accordance with some unclaimed embodiments, a computer program product may perform a method. The method may include receiving from a network entity, at least one paging message comprising at least one indication that at least one idle-mode preconfigured uplink resource configuration may be used for transmitting at least one response to the at least one paging message. The method may further include determining that at least one timing advance is valid. The method may further include transmitting at least one radio resource control message to the network entity based upon at least one of the at least one idle-mode preconfigured uplink resource configurations.

In accordance with some unclaimed embodiments, an apparatus may include circuitry configured to receive from a network entity, at least one paging message comprising at least one indication that at least one idle-mode preconfigured uplink resource configuration may be used for transmitting at least one response to the at least one paging message. The circuitry may further be configured to determine that at least one timing advance is valid. The circuitry may further be configured to transmit at least one radio resource control message to the network entity based upon at least one of the at least one idle-mode preconfigured uplink resource configurations.

### BRIEF DESCRIPTION OF THE DRAWINGS:

For proper understanding of this disclosure, reference should be made to the accompanying drawings, wherein:
FIG. 1 illustrates an example of preconfigured uplink resources according to certain embodiments.
FIG. 2 illustrates an example of preconfigured uplink resources and paging according to certain embodiments.
FIG. 3 illustrates a signaling diagram according to certain embodiments.
FIG. 4 illustrates an example of a method performed by a network entity according to certain embodiments.
FIG. 5 illustrates an example of a method performed by a user equipment according to certain embodiments.
FIG. 6 illustrates an example of a system according to certain embodiments.

### DETAILED DESCRIPTION:

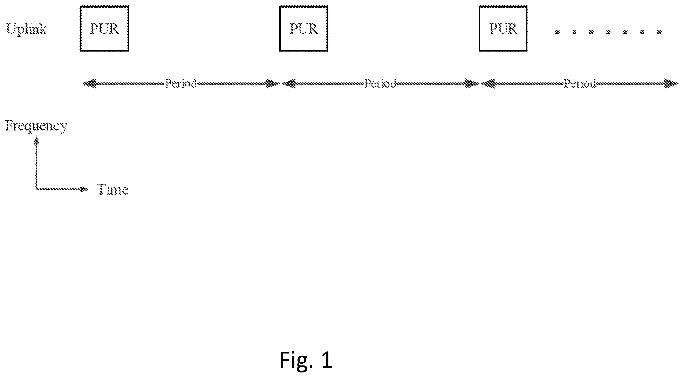

FIG. 1 illustrates an example of preconfigured uplink resources according to certain embodiments. Specifically, a UE may be configured with at least one idle-mode PUR configuration while operating in an RRC connected mode. Such an idle-mode PUR configuration may be related to an uplink data transmission, such as starting subframe, periodicity, time/frequency resource allocation, MCS, TBS, number of repetitions, number of transport blocks, HARQ process numbers, and power control. The idle-mode PUR configuration may also relate to timing advance (TA) validation criteria, such as timer and RSRP changes, for a UE to validate its TA prior to uplink data transmission. The configuration may also be related to control channel monitoring, for example, to receive ACK/NACK or control messages such as PUR release, modification or reconfiguration. Finally, the idle-mode PUR configuration may be related to PUR release and fallback, such as for UE to automatically release PUR resources if there has been no transmission for N occasions, or for UE to fallback to an RRC connected mode when the uplink data buffer size is greater than K bits. When a UE is released by a network from a connected mode into an idle mode, the UE will then operate according to at least one idle-mode PUR configuration.

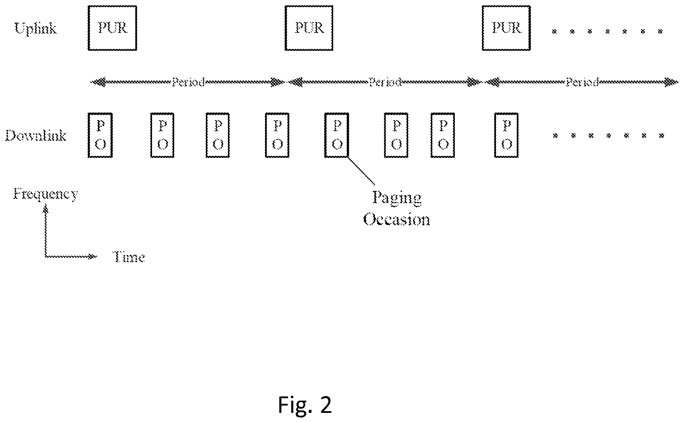

Although 3GPP Rel-16 may support idle-mode PUR transmission, while in idle mode, UE may also monitor for paging messages, as illustrated in FIG. 2, and may perform initial access for connection establishment and/or for early data transmission when paged. However, NB-IoT and eMTC UEs are half-duplex, and thus, cannot monitor paging and transmit on PUR simultaneously. Furthermore, during an initial access procedure, there may also be potential conflicts between PUR and other scheduled transmissions, such as DCI, PDSCH, PRACH, PUSCH, PUCCH, and ACK/NACK.

If a base station is unaware of the PUR configuration at the UE, the base station may transmit the paging message at the same time the UE is transmitting PUR. As a result, the UE may not receive the paging message, requiring the base station to transmit the paging message again. In some cases, an MME may expand a paging area if the base station reports that the paging was unsuccessful, and the paging message may unnecessarily be sent by many other base stations in an attempt to reach the user equipment.

During an initial access or early data transmission procedure, there may be collision between preconfigured uplink transmissions and scheduled downlink or uplink transmissions, such as DCI, PDSCH, PRACH, PUSCH, PUCCH, and/or ACK/NACK. Even if the user equipment has a valid timing advance as part of PUR configuration, it may need to undergo a random access procedure, which may comprise at least msg1, msg2, and msg3, during an initial access or early data transmission procedure, which may be wasteful of resources. Thus, improvements are desired which overcome the limitations of PUR when UE is monitoring for paging, as well as when UE is performing initial access or early data transmissions.

3GPP R2-1901472 describes collisions between PUR and PO, and proposes to align PUR and PO so as to avoid collision, such as by designing PUR configuration so that DRX is considered. In addition, 3GPP R1-1901858 addresses overlapping PUR and paging search spaces by configuring the UE to prioritize a PUR search space, and within that search space, a base station may send a MPDCCH carrying a DL grant to a PDSCH scheduled transmitting DL data for the paging UE.

Certain embodiments described herein may simplify the random access procedure by eliminating the need for msg1 and msg2, and instead transmitting msg3 using PUR. Furthermore, because msg1 is contention-based, skipping the transmission of msg1 is beneficial by reducing the need to perform contention resolution. Certain embodiments are, therefore, directed to improvements in computer-related technology, specifically, by conserving network resources and reducing power consumption of network entities and/or user equipment located within the network.

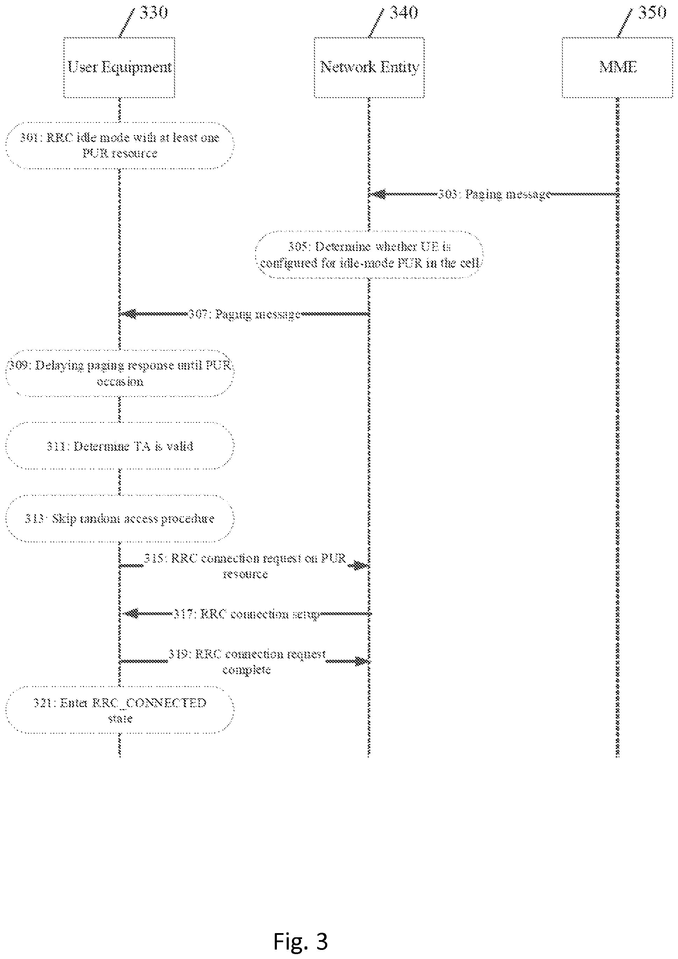

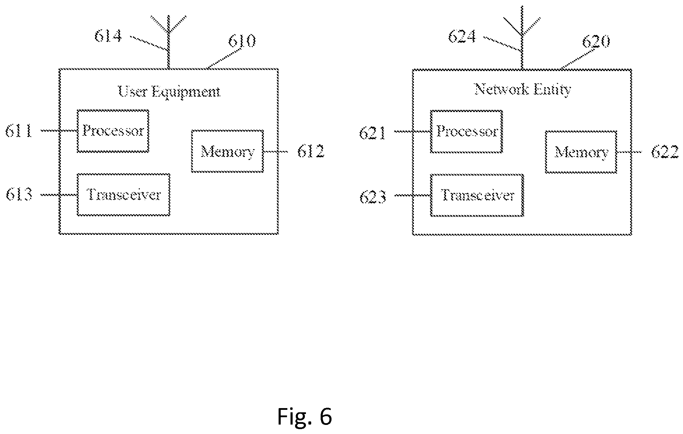

FIG. 3 illustrates an example of a signalling diagram according to some embodiments. User equipment (UE) 330 may be similar to UE 610 in FIG. 6, network entity (NE) 340 may be similar to NE 620 in FIG. 6, and mobility management entity (MME) 350 may be similar to MME 650 in FIG. 6. Although only a single UE, NE, and MME are illustrated, a communications network may contain one or more of each of these entities. In step 301, UE 330 may be in an RRC idle mode and configured with at least one PUR resource. In step 303, MME 350 may transmit at least one paging message to NE 340.

In step 305, NE 340 determines whether UE 330 is configured for at least one idle-mode PUR in the cell. In various embodiments, NE 340 may associate at least one PUR configuration with one or more of at least one international mobile subscriber identity (IMSI), at least one serving temporary mobile subscriber identity (S-TMSI), and at least one paging identifier. Additionally or alternatively, NE 340 may acquire at least one RRC resume ID and/or at least one NAS ID associated with UE 330.

In various embodiments, at least one PUR configuration may be maintained at MME 350. For example, MME 350 may send at least one PUR configuration to NE 340 during paging, which, for example, may enable UE 330 to have multiple PUR configurations associated with different cells, such as where UE 330 is configured for PUR in multiple cells.

In some embodiments, NE 340 may determine whether collision exists between at least one configured PUR resource and at least one paging occasion (PO) for UE 330. Upon determining that collision does exist between at least one configured PUR resource and at least one PO for UE 330, NE 340 may postpone at least one paging message to a next available PO to UE 330 for a predetermined period of time. In various embodiments, NE 340 may postpone at least one paging message to a later available PO for UE 330 occurring before the next PUR occasion for UE 330. Alternatively, UE 330 may be configured to prioritize at least one type of transmission and/or postpone either transmitting on the PUR or monitoring the PO for paging. Furthermore, NE 340 may configure at least one wake-up signal to inform UE 330 prior to the PO of whether UE 330 will be paged in that PO.

In various embodiments, where the at least one paging message includes data payload below a predetermined threshold as part of a MT-EDT transmission, which is configured for uplink data from UE 330, NE 340 may indicate in the at least one paging message whether at least one PUR resource may be used to transmit at least one response instead of planned content of PUR. Alternatively, the TBS size may be increased to accommodate both payloads in at least one allocated PUR. This increase may result in at least one assigned PUR resource, such as a number of repetitions, may be automatically adjusted.

In some embodiments, NE 340 may transmit at least one paging message for additional UE which do not have collision between at least one configured PUR resource and at least one PO.

In step 307, NE 340 transmits at least one paging message to UE 330. The at least one paging message may indicate to UE 330 whether it may use PUR resources for at least one paging response and/or skip at least one step associated with at least one random access procedure. In some embodiments, at least one PUR resource and at least one PO may be aligned so that collisions are not possible.

In various embodiments, NE 340 may not transmit the at least one paging message, and/or may monitor for the at least one PUR occasion. Additionally or alternatively, in response to determining that there was an uplink transmission in the at least one PUR resource, NE 340 may transmit at least one radio resource control (RRC) message to UE 330 informing UE 330 of pending mobile-terminated data, such as downlink data, without previously receiving data from UE 330 in the PUR resource. To receive the RRC message, UE 330 may monitor, after the PUR, a control channel search space associated with the MPDCCH/NPDCCH scheduling the RRC message even when there was not uplink transmission in the PUR resource. UE 330 may then transmit an RRC response message.

In some embodiments, if the at least one paging message is triggered to obtain a report from UE 330, a core network may transmit at least one notification to NE 340 so that NE 340 may consider allocating a one-shot PUR after the paging response, as well as an expected TBS size. In turn, NE 340 may use the at least one indication to modify at least one PUR TBS size or to schedule a one-shot PUR for an additional uplink transmission as a part of the response to the network's trigger for a report.

In certain embodiments, UE 330 may not monitor for at least one PO if at least one machine type communication physical downlink control channel (MPDCCH)/narrowband physical downlink control channel (NPDCCH) search space overlaps with PUR in time.

In some embodiments, where NE 340 has not received data on the PUR for a predetermined number of occasions from UE 330, NE 340 may transmit at least one paging message to UE 330 where there is collision between at least one configured PUR and at least one PO, where the predetermined number of occasions may be indicated to UE 330 as part of at least one PUR configuration.

In step 309, if UE 330 is not transmitting data on at least one PUR resource, UE 330 may delay at least one paging response and/or monitor the PO for MPDCCH/NPDCCH. In step 311, UE 330 may determine that at least one timing advance (TA) is valid.

In step 313, upon determining that the at least one received paging message includes at least one indication that UE 330 may use PUR resources for at least one paging response, UE 330 may avoid performing at least one random access procedure upon determining that the at least one TA is valid. Additionally, if the TA is not valid, the UE may perform at least one random access procedure and/or update the TA value.

In some embodiments, in the event of collision between at least one configured PUR resource and at least one scheduled transmission (DCI, PDSCH, PRACH, PUSCH, ACK/NACK) during initial access or early data transmission procedure, UE 330 may skip PUR.

In step 315, UE 330 transmits at least one response to the paging message, which may include at least one previously assigned PUR-RNTI. The previously assigned PUR-RNTI may be stored by NE 340 in at least one PUR context. In certain embodiments, where UE 330 determines that UE 330 does not have at least one valid TA, UE 330 may perform at least one random access procedure, followed by at least one RRC connection setup or RRC connection resume procedure.

In step 317, NE 340 may transmit at least one msg4 to UE 330, which may assign at least one C-RNTI to UE 330. In some embodiments, NE 340 may determine whether the TBS assigned in the PUR configuration is compatible with at least one RRC message, for example, RRC connection request and RRC connection resume request. Msg4 may contain one or more of at least one contention resolution message, at least one RRC connection setup message, at least one RRC connection resume message, and at least one early data transmission. In some embodiments, where at least one PUR resource is allocated after the at least one paging occasion, msg4 may include at least one contention resolution information.

In some embodiments, where UE 330 is configured to transmit at least one PUR to NE 340, at least one additional indication may be included in the RRC connection setup request. Alternatively or additionally, where UE 330 is not configured to transmit at least one PUR to NE 340, at least one paging response may be transmitted to NE 340 instead of PUR, whereby NE 340 may be configured to decode another TBS size.

In certain embodiments, upon determining that UE 330 has at least one valid TA response, UE 330 may transmit at least one RRC message, such as an RRC connection request and RRC connection resume request, in PUR resources to NE 340.

In step 319, UE 330 may transmit at least one RRC connection request to NE 340. In step 321, UE 330 may enter an RRC CONNECTED state.

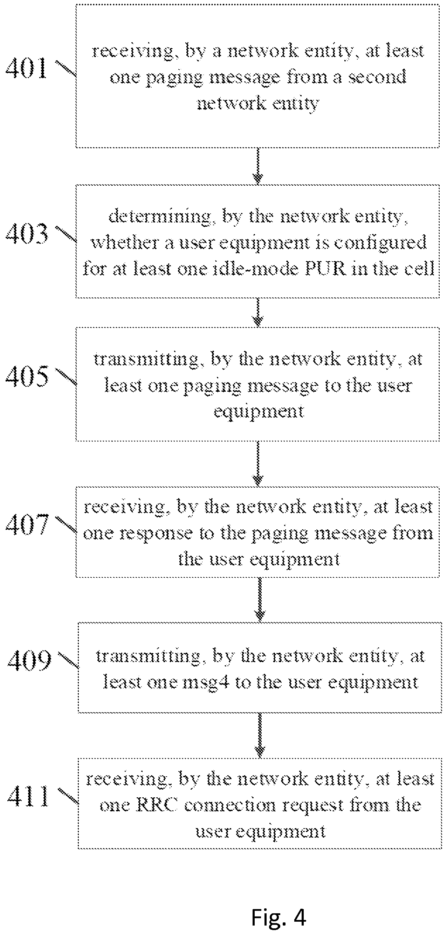

FIG. 4 illustrates an example of a method performed by a network entity, such as network entity 610 in FIG. 6. In step 401, the network entity may receive at least one paging message from a second network entity, which may also be similar to NE 620 in FIG. 6.

In step 403, the network entity determines whether a user equipment, such as UE 620 in FIG. 6, is configured for at least one idle-mode PUR in the cell. In various embodiments, the network entity may associate at least one PUR configuration with one or more of at least one international mobile subscriber identity (IMSI), at least one serving temporary mobile subscriber identity (S-TMSI), and at least one paging identifier. Additionally or alternatively, the network entity may acquire at least one RRC resume ID and/or at least one NAS ID associated with the user equipment.

In various embodiments, at least one PUR configuration may be maintained at the second network entity. For example, the second network entity may send at least one PUR configuration to the network entity during paging, which, for example, may enable the user equipment to have multiple PUR configurations associated with different cells, such as where the user equipment is configured for PUR in multiple cells.

In some embodiments, the network entity may determine whether collision exists between at least one configured PUR resource and at least one paging occasion (PO). Upon determining that collision does exist between at least one configured PUR resource and at least one PO, the network entity may postpone at least one paging message to a next available PO to the user equipment for a predetermined period of time.

In various embodiments, where the at least one paging message includes small data payload as part of a MT-EDT transmission, which is configured for uplink data from the user equipment, the network entity may indicate in the at least one paging message whether at least one PUR resource may be used to transmit at least one response instead of planned content of PUR. Alternatively, the TBS size may be increased to accommodate both payloads in at least one allocated PUR.

In some embodiments, the network entity may transmit at least one paging message for additional UE which do not have collision between at least one configured PUR resource and at least one PO.

In step 405, the network entity transmits at least one paging message to the user equipment. The at least one paging message may indicate to the user equipment whether it may use PUR resources for at least one paging response and/or skip at least one step associated with at least one random access procedure. In some embodiments, at least one PUR resource and at least one PO may be aligned so that collisions are not possible.

In various embodiments, the network entity may not transmit the at least one paging message, and/or may monitor for the at least one PUR occasion. Additionally or alternatively, in response to determining that there was an uplink transmission in the at least one PUR resource, the network entity may transmit at least one radio resource control (RRC) message to the user equipment informing the user equipment of pending mobile-terminated data, such as downlink data. The user equipment may then transmit an RRC response message.

In various embodiments, the network entity may transmit at least one RRC message to the user equipment to inform the user equipment of pending mobile-terminated data without previously receiving data from the user equipment in the PUR resource. Therefore, the user equipment may monitor, after the PUR, a control channel search space associated with the MPDCCH/NPDCCH scheduling the RRC message even when there was not uplink transmission in the PUR resource.

In some embodiments, if the at least one paging message is triggered to obtain a report from the user equipment, a core network may transmit at least one notification to the network entity so that the network entity may consider allocating at least one shot PUR after the paging response, as well as an expected TBS size. In turn, the network entity may use the at least one indication to modify at least one PUR TBS size and/or to schedule one short PUR for an additional uplink transmission as a response for the scheduled PUR transmission.

In certain embodiments, the user equipment may not monitor for at least one PO if at least one machine type communication physical downlink control channel (MPDCCH)/narrowband physical downlink control channel (NPDCCH) search space overlaps with PUR in time.

In some embodiments, where the network entity has not received data on the PUR for a predetermined number of occasions from the user equipment, the network entity may transmit at least one paging message to the user equipment where there is collision between at least one configured PUR and at least one PO, where the predetermined number of occasions may be indicated to the user equipment as part of at least one PUR configuration.

In step 407, the network entity receives at least one response to the paging message from the user equipment, which may include at least one previously assigned PUR-RNTI. The previously assigned PUR-RNTI may be stored by the network entity in at least one PUR context.

In step 409, the network entity may transmit at least one msg4 to the user equipment, which may assign at least one C-RNTI to the user equipment. In some embodiments, the network entity may determine whether the TBS assigned in the PUR configuration is compatible with at least one RRC message, for example, RRC connection request and RRC connection resume request.

In step 411, the network entity may receive at least one RRC connection request from the user equipment.

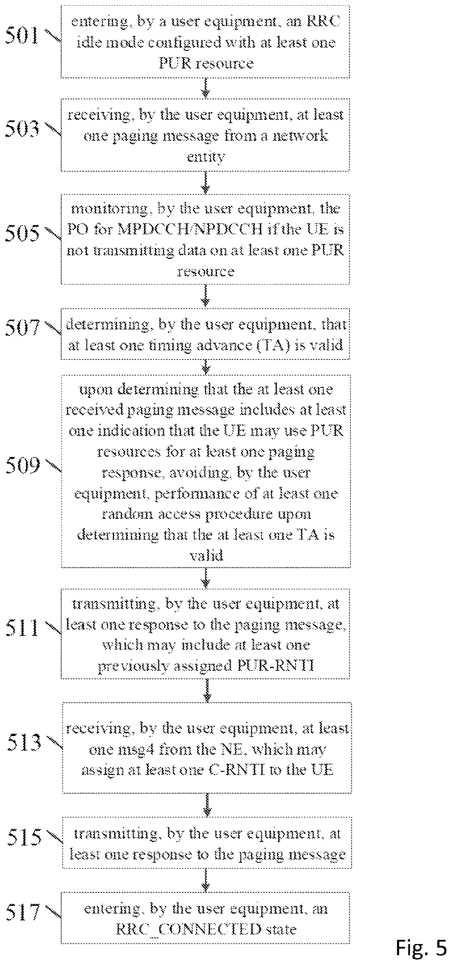

FIG. 5 illustrates an example of a method performed by a user equipment, such as UE 610 in FIG. 6. In step 501, the UE may enter an RRC idle mode configured with at least one PUR resource. In step 503, the UE may receive at least one paging message from a network entity, such as NE 620 in FIG. 6. The at least one paging message may indicate to the user equipment whether it may use PUR resources for at least one paging response and/or skip at least one step associated with at least one random access procedure. In some embodiments, at least one PUR resource and at least one PO may be aligned so that collisions are not possible.

In various embodiments, the UE may receive at least one radio resource control (RRC) message from the NE informing the UE of pending mobile-terminated data, such as downlink data. The NE may then receive the at least one paging message from the NE.

In various embodiments, the UE may receive at least one RRC message from the NE to inform the UE of pending mobile-terminated data without previously transmitting data to the NE in the PUR resource. Upon receiving the at least one RRC message, the UE may monitor a control channel search space after the PUR associated with the MPDCCH/NPDCCH scheduling the at least one paging message.

In certain embodiments, the UE may not monitor for at least one PO if at least one machine type communication physical downlink control channel (MPDCCH)/narrowband physical downlink control channel (NPDCCH) search space overlaps with PUR in time.

In some embodiments, where the NE has not received data on the PUR for a predetermined number of occasions from the UE, the UE may receive at least one paging message from the NE where there is collision between at least one configured PUR and at least one PO, where the predetermined number of occasions may be indicated to the UE as part of at least one PUR configuration.

In step 505, if the UE is not transmitting data on at least one PUR resource, the UE may monitor the PO for MPDCCH/NPDCCH.

In step 507, the UE delay transmitting at least one PO and/or may determine that at least one timing advance (TA) is valid.

In step 509, upon determining that the at least one received paging message includes at least one indication that the UE may use PUR resources for at least one paging response, the UE may avoid performing at least one random access procedure upon determining that the at least one TA is valid. Alternatively or additionally, the indication that the UE may use PUR resources for at least one paging response may be sent via higher layer signaling, such as with system information block or RRC configuration.

In some embodiments, in the event of collision between at least one configured PUR resource and at least one scheduled transmission (DCI, PDSCH, PRACH, PUSCH, ACK/NACK) during initial access or early data transmission procedure, the UE may skip PUR.

In step 511, the UE may transmit at least one response to the paging message, which may include at least one previously assigned PUR-RNTI. The previously assigned PUR-RNTI may be stored by the NE in at least one PUR context. In certain embodiments, where the UE determines that the UE does not have at least one valid TA, the UE may perform at least one random access procedure, followed by at least one RRC connection setup or RRC connection resume procedure.

In step 513, the UE may receive at least one msg4 from the NE, which may assign at least one C-RNTI to the UE.

In some embodiments, where the UE is configured to transmit at least one PUR to the NE, at least one additional indication may be included in the RRC connection setup request. Alternatively or additionally, where the UE is not configured to transmit at least one PUR to the NE, at least one paging response may be transmitted to the NE instead of PUR, whereby the NE may be configured to decode another TBS size.

In certain embodiments, upon determining that the UE has at least one valid TA response, the UE may transmit at least one RRC message, such as an RRC connection request and RRC connection resume request, in PUR resources to the NE.

In step 515, the UE may transmit at least one RRC connection request to the NE.

In step 517, the UE may enter an RRC_CONNECTED state.

FIG. 6 illustrates an example of a system according to certain embodiments. In one embodiment, a system may include multiple devices, such as, for example, UE 610 and NE 620. UE 610 and/or NE 620 may be one or more of a base station, such as an evolved node B (eNB) or next generation node B (gNB), a next generation radio access network (NG RAN), a mobility management entity, a serving gateway, a server, and/or any other access node or combination thereof.

One or more of these devices may include at least one processor, respectively indicated as 611 and 621. At least one memory may be provided in one or more of devices indicated at 612 and 622. The memory may be fixed or removable. The memory may include computer program instructions or computer code contained therein. Processors 611 and 621 and memory 612 and 622 or a subset thereof, may be configured to provide means corresponding to the various blocks of FIGS. 1-5. Although not shown, the devices may also include positioning hardware, such as global positioning system (GPS) or micro electrical mechanical system (MEMS) hardware, which may be used to determine a location of the device. Other sensors are also permitted and may be included to determine location, elevation, orientation, and so forth, such as barometers, compasses, and the like.

As shown in FIG. 6, transceivers 613 and 623 may be provided, and one or more devices may also include at least one antenna, respectively illustrated as 614 and 624. The device may have many antennas, such as an array of antennas configured for multiple input multiple output (MIMO) communications, or multiple antennas for multiple radio access technologies. Other configurations of these devices, for example, may be provided.

Transceivers 613 and 623 may be a transmitter, a receiver, or both a transmitter and a receiver, or a unit or device that may be configured both for transmission and reception.

Processors 611 and 621 may be embodied by any computational or data processing device, such as a central processing unit (CPU), application specific integrated circuit (ASIC), or comparable device. The processors may be implemented as a single controller, or a plurality of controllers or processors.

Memory 612 and 622 may independently be any suitable storage device, such as a non-transitory computer-readable medium. A hard disk drive (HDD), random access memory (RAM), flash memory, or other suitable memory may be used. The memories may be combined on a single integrated circuit as the processor, or may be separate from the one or more processors. Furthermore, the computer program instructions stored in the memory and which may be processed by the processors may be any suitable form of computer program code, for example, a compiled or interpreted computer program written in any suitable programming language. Memory may be removable or non-removable.

The memory and the computer program instructions may be configured, with the processor for the particular device, to cause a hardware apparatus such as user equipment to perform any of the processes described below (see, for example, FIGS. 1-5). Therefore, in certain embodiments, a non-transitory computer-readable medium may be encoded with computer instructions that, when executed in hardware, perform a process such as one of the processes described herein. Alternatively, certain embodiments may be performed entirely in hardware.

In certain embodiments, an apparatus may include circuitry configured to perform any of the processes or functions illustrated in FIGS. 1-5. For example, circuitry may be hardware-only circuit implementations, such as analog and/or digital circuitry. In another example, circuitry may be a combination of hardware circuits and software, such as a combination of analog and/or digital hardware circuit(s) with software or firmware, and/or any portions of hardware processor(s) with software (including digital firmware, and/or any portions of hardware processor(s) with software (including digital signal processor(s)), software, and at least one memory that work together to cause an apparatus to perform various processes or functions. In yet another example, circuitry may be hardware circuit(s) and or processor(s), such as a microprocessor(s) or a portion of a microprocessor(s), that include software, such as firmware for operation. Software in circuitry may not be present when it is not needed for the operation of the hardware.

The features, structures, or characteristics of certain embodiments described throughout this specification may be combined in any suitable manner in one or more embodiments. For example, the usage of the phrases "certain embodiments," "some embodiments," "other embodiments," or other similar language, throughout this specification refers to the fact that a particular feature, structure, or characteristic described in connection with the embodiment may be included in at least one embodiment of the present invention. Thus, appearance of the phrases "in certain embodiments," "in some embodiments," "in other embodiments," or other similar language, throughout this specification does not necessarily refer to the same group of embodiments, and the described features, structures, or characteristics may be combined in any suitable manner in one or more embodiments.

One having ordinary skill in the art will readily understand that certain embodiments discussed above may be practiced with steps in a different order, and/or with hardware elements in configurations which are different than those which are disclosed.

Partial Glossary
- 3GPP: 3rd Generation Partnership Project
- 5G: 5th Generation Wireless System
- BL: Bandwidth Limited
- CE: Coverage Enhancement
- CN: Core Network
- C-RNTI: Cell Radio Network Temporary Identifier
- DCI: Downlink Control Information
- DL: Downlink
- eMTC: Enhanced Machine Type Communications
- eNB: evolved Node B
- E-UTRAN: Evolved Universal Mobile Telecommunications System Terrestrial Radio Access Network
- IMSI: International Mobile Subscriber Identity
- gNB: Next Generation Node B
- LTE: Long Term Evolution
- MIB: Master Information Block
- MIMO: Multiple Input Multiple Output
- MPDCCH: Machine Type Communication Physical Downlink Control Channel
- MME: Mobility Management Entity
- MT-EDT: Mobile Terminated Early Data Transmission
- NAS: Non-Access Stratum
- NB-IoT: Narrowband Internet of Things
- NE: Network Entity
- NPDCCH: Narrowband Physical Downlink Control Channel
- NR: New Radio (5G)
- OFDM: Orthogonal Frequency Division Multiplex
- OTDOA: Observed Time Difference of Arrival
- PDSCH: Physical Downlink Data Channel
- PO: Paging Occasion
- PRB: Physical Resource Block
- PUR: Preconfigured Uplink Resource
- RE: Resource Element
- RRC: Radio Resource Control
- RS: Reference Signal
- SIB: System Information Block
- SINR: Signal to Interference plus Noise Ratio
- S-TMSI: System Architecture Evolution Temporary Mobile Subscriber Identity
- UE: User Equipment

## Claims

1. A network entity (340), comprising:
means for determining whether a user equipment (330) is associated with at least one idle-mode preconfigured uplink resource, PUR, configuration;
means for transmitting to the user equipment (330) at least one paging message comprising at least one indication that at least one of the at least one idle-mode PUR configuration may be used for transmitting at least one response to the at least one paging message; and
means for receiving from the user equipment (330), at least one radio resource control message based on at least one of the at least one indicated idle-mode PUR configuration.

2. The network entity (340) according to claim 1, further comprising means for receiving at least one paging message from a second network entity (350).

3. The network entity (340) according to any of claims 1 or 2, further comprising means for receiving at least one response to the paging message from the user equipment (330).

4. The network entity (340) according to any of claims 1-3, further comprising means for transmitting at least one msg4 to the user equipment (330), wherein the at least one msg4 is configured to assign at least one cell radio network temporary identifier to the user equipment (330).

5. The network entity (340) according to any of claims 1-4, further comprising, where the user equipment (330) has not used at least one preconfigured uplink resource for a predetermined number of previous occasions, means for paging the user equipment (330) even if there is a collision between the at least one preconfigured uplink resource and the at least one paging occasion.

6. The network entity (340) according to any of claims 5, wherein the predetermined number of previous occasions is indicated to the user equipment (330) as part of the PUR configuration.

7. A user equipment (330), comprising:
means for receiving from a network entity (340), at least one paging message comprising at least one indication that at least one idle-mode preconfigured uplink resource, PUR, configuration may be used for transmitting at least one response to the at least one paging message;
means for determining that at least one timing advance is valid; and
means for transmitting at least one radio resource control message to the network entity (340) based upon at least one of the at least one idle-mode PUR configuration.

8. The user equipment (330)according to claim 7, further comprising means for monitoring a paging occasion for MPDCCH/NPDCCH if the user equipment (330) is not transmitting data on at least one PUR resource.

9. The user equipment (330) according to any of claims 7 or 8, further comprising, upon determining that the at least one received paging message includes at least one indication that the user equipment (330) may use PUR resources for at least one paging response, means for avoiding preamble transmission upon determining that the at least one time advance is valid.

10. The user equipment (330) according to any of claims 7-9, further comprising means for transmitting at least one response to the paging message, which includes at least one previously assigned PUR radio network temporary identifier.

11. The user equipment (330) according to any of claims 7-10, further comprising means for receiving at least one msg4 from the network entity (340).

12. The user equipment (330) according to any of claims 7-11, further comprising means for transmitting at least one response to the at least one paging message.

13. The user equipment (330) according to any of claims 7-12, further comprising means for entering an RRC_CONNECTED state.

14. A method performed by a network entity (340), the method comprising:
Determining (403) whether a user equipment (330) is associated with at least one idle-mode preconfigured uplink resource, PUR, configuration;
Transmitting (405) to the user equipment (330) at least one paging message comprising at least one indication that at least one of the at least one idle-mode PUR configuration may be used for transmitting at least one response to the at least one paging message; and
receiving (407) from the user equipment (330), at least one radio resource control message based on at least one of the at least one indicated idle-mode PUR configuration.

15. A method performed by a user equipment (330), the method comprising:
Receiving (503) from a network entity (340), at least one paging message comprising at least one indication that at least one idle-mode preconfigured uplink resource, PUR, configuration may be used for transmitting at least one response to the at least one paging message;
determining (507) that at least one timing advance is valid; and
transmitting (511) at least one radio resource control message to the network entity (340) based upon at least one of the at least one idle-mode PUR configuration.

## Patentansprüche

1. Netzwerkentität (340), die Folgendes umfasst:
Mittel zum Bestimmen, ob eine Teilnehmereinrichtung (330) mit mindestens einer vorausgelegten Uplinkressourcen(PUR)-Auslegung für einen Ruhemodus verknüpft ist;
Mittel zum Übertragen von mindestens einer Pagingnachricht, die mindestens eine Anzeige umfasst, dass mindestens eine der mindestens einen Ruhemodus-PUR-Auslegung zum Übertragen von mindestens einer Antwort auf die mindestens eine Pagingnachricht verwendet werden kann, zur Teilnehmereinrichtung (330); und
Mittel zum Empfangen von mindestens einer Funkressourcensteuernachricht von der Teilnehmereinrichtung (330) auf Basis von mindestens einer der mindestens einen angezeigten Ruhemodus-PUR-Auslegung.

2. Netzwerkentität (340) nach Anspruch 1, die ferner Mittel zum Empfangen von mindestens einer Pagingnachricht von einer zweiten Netzwerkentität (350) umfasst.

3. Netzwerkentität (340) nach einem der Ansprüche 1 oder 2, die ferner Mittel zum Empfangen von mindestens einer Antwort auf die Pagingnachricht von der Teilnehmereinrichtung (330) umfasst.

4. Netzwerkentität (340) nach einem der Ansprüche 1 bis 3, die ferner Mittel zum Übertragen von mindestens einem msg4 zur Teilnehmereinrichtung (330) umfasst, wobei das mindestens eine msg4 dazu ausgelegt ist, der Teilnehmereinrichtung (330) mindestens eine temporäre Kennung eines Zellfunknetzwerks zuzuweisen.

5. Netzwerkentität (340) nach einem der Ansprüche 1 bis 4, die, wenn die Teilnehmereinrichtung (330) nicht mindestens eine vorausgelegte Uplinkressource für eine vorbestimmte Anzahl von vorherigen Gelegenheiten verwendet hat, ferner Mittel zum Paging der Teilnehmereinrichtung (330) auch dann umfasst, wenn es zwischen der mindestens einen vorausgelegten Uplinkressource und der mindestens einen Paginggelegenheit zu einer Kollision kommt.

6. Netzwerkentität (340) nach Anspruch 5, wobei die vorbestimmte Anzahl von vorherigen Gelegenheiten der Teilnehmereinrichtung (330) als Teil der PUR-Auslegung angezeigt wird.

7. Teilnehmereinrichtung (330), die Folgendes umfasst:
Mittel zum Empfangen von mindestens einer Pagingnachricht, die mindestens eine Anzeige umfasst, dass mindestens eine vorausgelegte Uplinkressourcen(PUR)-Auslegung für einen Ruhemodus zum Übertragen von mindestens einer Antwort auf die mindestens eine Pagingnachricht verwendet werden kann, von einer Netzwerkentität (340);
Mittel zum Bestimmen, dass mindestens ein Timingvorlauf gültig ist; und
Mittel zum Übertragen von mindestens einer Funkressourcensteuernachricht zur Netzwerkentität (340) auf Basis von mindestens einer der mindestens einen Ruhemodus-PUR-Auslegung.

8. Teilnehmereinrichtung (330) nach Anspruch 7, die ferner Mittel zum Überwachen einer Paginggelegenheit auf MPDCCH/NPDCCH umfasst, wenn die Teilnehmereinrichtung (330) auf mindestens einer PUR-Ressource keine Daten überträgt.

9. Teilnehmereinrichtung (330) nach einem der Ansprüche 7 oder 8, die nach Bestimmen, dass die mindestens eine empfangene Pagingnachricht mindestens eine Anzeige beinhaltet, dass die Teilnehmereinrichtung (330) PUR-Ressourcen für mindestens eine Pagingantwort verwenden kann, ferner Mittel zum Vermeiden einer Präambelübertragung nach Bestimmen, dass die mindestens eine Zeitvoreilung gültig ist, umfasst.

10. Teilnehmereinrichtung (330) nach einem der Ansprüche 7 bis 9, die ferner Mittel zum Übertragen von mindestens einer Antwort auf die Pagingnachricht umfasst, die mindestens eine zuvor zugewiesene temporäre Kennung für ein PUR-Funknetzwerk beinhaltet.

11. Teilnehmereinrichtung (330) nach einem der Ansprüche 7 bis 10, die ferner Mittel zum Empfangen von mindestens einem msg4 von der Netzwerkentität (340) umfasst.

12. Teilnehmereinrichtung (330) nach einem der Ansprüche 7 bis 11, die ferner Mittel zum Übertragen von mindestens einer Antwort auf die mindestens eine Pagingnachricht umfasst.

13. Teilnehmereinrichtung (330) nach einem der Ansprüche 7 bis 12, die ferner Mittel zum Eintreten in einen RRC_CONNECTED-Zustand umfasst.

14. Verfahren das von einer Netzwerkentität (340) durchgeführt wird, wobei das Verfahren Folgendes umfasst:
Bestimmen (403), ob eine Teilnehmereinrichtung (330) mit mindestens einer vorausgelegten Uplinkressourcen(PUR)-Auslegung für einen Ruhemodus verknüpft ist;
Übertragen (405) von mindestens einer Pagingnachricht, die mindestens eine Anzeige umfasst, dass mindestens eine der mindestens einen Ruhemodus-PUR-Auslegung zum Übertragen von mindestens einer Antwort auf die mindestens eine Pagingnachricht verwendet werden kann, zur Teilnehmereinrichtung (330); und
Empfangen (407) von mindestens einer Funkressourcensteuernachricht von der Teilnehmereinrichtung (330) auf Basis von mindestens einer der mindestens einen angezeigten Ruhemodus-PUR-Auslegung.

15. Verfahren, das von einer Teilnehmereinrichtung (330) durchgeführt wird, wobei das Verfahren Folgendes umfasst:
Empfangen (503) von mindestens einer Pagingnachricht, die mindestens eine Anzeige umfasst, dass mindestens eine vorausgelegte Uplinkressourcen(PUR)-Auslegung für einen Ruhemodus zum Übertragen von mindestens einer Antwort auf die mindestens eine Pagingnachricht verwendet werden kann, von einer Netzwerkentität (340);
Bestimmen (507), dass mindestens ein Timingvorlauf gültig ist; und
Übertragen (511) von mindestens einer Funkressourcensteuernachricht zur Netzwerkentität (340) auf Basis von mindestens einer der mindestens einen Ruhemodus-PUR-Auslegung.

## Revendications

1. Entité de réseau (340), comprenant :
des moyens pour déterminer si un équipement utilisateur (330) est associé à au moins une configuration de ressource de liaison montante préconfigurée, PUR, en mode veille ;
des moyens pour transmettre à l'équipement utilisateur (330) au moins un message de radiomessagerie comprenant au moins une indication qu'au moins une de la ou des configurations PUR en mode veille peut être utilisée pour transmettre au moins une réponse à l'au moins un message de radiomessagerie ; et
des moyens pour recevoir de l'équipement utilisateur (330), au moins un message de commande de ressource radio en fonction d'au moins une de la ou des configurations PUR en mode veille indiquées.

2. Entité de réseau (340) selon la revendication 1, comprenant en outre des moyens pour recevoir au moins un message de radiomessagerie d'une deuxième entité de réseau (350).

3. Entité de réseau (340) selon l'une des revendications 1 ou 2, comprenant en outre des moyens pour recevoir au moins une réponse au message de radiomessagerie de l'équipement utilisateur (330).

4. Entité de réseau (340) selon l'une des revendications 1 à 3, comprenant en outre des moyens pour transmettre au moins un msg4 à l'équipement utilisateur (330), dans laquelle l'au moins un msg4 est configuré pour attribuer au moins un identifiant temporaire de réseau radio cellulaire à l'équipement utilisateur (330).

5. Entité de réseau (340) selon l'une des revendications 1 à 4, comprenant en outre, lorsque l'équipement utilisateur (330) n'a pas utilisé au moins une ressource de liaison montante préconfigurée pendant un nombre prédéterminé d'occasions précédentes, des moyens pour appeler l'équipement utilisateur (330) même s'il y a une collision entre l'au moins une ressource de liaison montante préconfigurée et l'au moins une occasion de radiomessagerie.

6. Entité de réseau (340) selon la revendication 5, dans laquelle le nombre prédéterminé d'occasions précédentes est indiqué à l'équipement utilisateur (330) dans le cadre de la configuration PUR.

7. Équipement utilisateur (330), comprenant :
des moyens pour recevoir d'une entité de réseau (340), au moins un message de radiomessagerie comprenant au moins une indication qu'au moins une configuration de ressource de liaison montante préconfigurée, PUR, en mode veille peut être utilisée pour transmettre au moins une réponse à l'au moins un message de radiomessagerie ;
des moyens pour déterminer qu'au moins une avance temporelle est valide ; et
des moyens pour transmettre au moins un message de commande de ressource radio à l'entité de réseau (340) en fonction d'au moins une de la ou des configurations PUR en mode veille.

8. Équipement utilisateur (330) selon la revendication 7, comprenant en outre des moyens pour surveiller une occasion de radiomessagerie pour MPDCCH/NPDCCH si l'équipement utilisateur (330) ne transmet pas de données sur au moins une ressource PUR.

9. Équipement utilisateur (330) selon l'une des revendications 7 ou 8, comprenant en outre, en déterminant que l'au moins un message de radiomessagerie reçu comporte au moins une indication que l'équipement utilisateur (330) peut utiliser des ressources PUR pour au moins une réponse de radiomessagerie, des moyens pour éviter la transmission de préambules en déterminant que l'au moins une avance temporelle est valide.

10. Équipement utilisateur (330) selon l'une des revendications 7 à 9, comprenant en outre des moyens pour transmettre au moins une réponse au message de radiomessagerie, qui comporte au moins un identifiant temporaire de réseau radio PUR précédemment attribué.

11. Équipement utilisateur (330) selon l'une des revendications 7 à 10, comprenant en outre des moyens pour recevoir au moins un msg4 de l'entité de réseau (340).

12. Équipement utilisateur (330) selon l'une des revendications 7 à 11, comprenant en outre des moyens pour transmettre au moins une réponse à l'au moins un message de radiomessagerie.

13. Équipement utilisateur (330) selon l'une des revendications 7 à 12, comprenant en outre des moyens pour entrer un état RRC_CONNECTED.

14. Procédé réalisé par une entité de réseau (340), le procédé comprenant les étapes suivantes :
déterminer (403) si un équipement utilisateur (330) est associé à au moins une configuration de ressource de liaison montante préconfigurée, PUR, en mode veille ;
transmettre (405) à l'équipement utilisateur (330) au moins un message de radiomessagerie comprenant au moins une indication qu'au moins une de la ou des configurations PUR en mode veille peut être utilisée pour transmettre au moins une réponse à l'au moins un message de radiomessagerie ; et
recevoir (407) de l'équipement utilisateur (330), au moins un message de commande de ressource radio en fonction d'au moins une de la ou des configurations PUR en mode veille indiquées.

15. Procédé réalisé par un équipement utilisateur (330), le procédé comprenant les étapes suivantes :
recevoir (503) d'une entité de réseau (340), au moins un message de radiomessagerie comprenant au moins une indication qu'au moins une configuration de ressource de liaison montante préconfigurée, PUR, en mode veille peut être utilisée pour transmettre au moins une réponse à l'au moins un message de radiomessagerie ;
déterminer (507) qu'au moins une avance temporelle est valide ; et
transmettre (511) au moins un message de commande de ressource radio à l'entité de réseau (340) en fonction d'au moins une de la ou des configurations PUR en mode veille.
